(19) Europäisches Patentamt
European Patent Office
Office européen des brevets

(11) Publication number: **0 377 998 A2**

(12) # EUROPEAN PATENT APPLICATION

(21) Application number: 89313440.3

(22) Date of filing: 21.12.89

(51) Int. Cl.5: C08L 61/04, C08G 14/06, C08K 5/21, C08K 5/3477

(30) Priority: 26.12.88 JP 326319/88
26.12.88 JP 326320/88
26.12.88 JP 326321/88

(43) Date of publication of application: 18.07.90 Bulletin 90/29

(84) Designated Contracting States: CH DE FR GB IT LI NL SE

(71) Applicant: MITSUI TOATSU CHEMICALS, INCORPORATED
2-5, 3-chome, Kasumigaseki
Chiyoda-ku Tokyo(JP)

(72) Inventor: Izukawa, Tsukuru
22-3 Aza Takami Oodakacho Midori-ku
Nagoya-shi Aichi-ken(JP)
Inventor: Ikado, Shuhei
669 Kajigayacho Sakae-ku
Yokohama-shi Kanagawa-ken(JP)
Inventor: Enomoto, Toshiyuki
2-6-42 Komachi
Kamakura-shi Kanagawa-ken(JP)

(74) Representative: Stuart, Ian Alexander et al
MEWBURN ELLIS 2 Cursitor Street
London EC4A 1BQ(GB)

(54) **Injection-molding thermosetting resin composition.**

(57) The invention provides injection-molding thermosetting resin compositions obtained by adding a fluidity modifier, which is selected from the group consisting of melamine compounds, benzoguanamine compounds and urea compounds, to a phenolic resin, hexamethylenetetramine, a filler and an additive. These resin compositions excellent thermal stability in a cylinder and curing property in a mold and can provide molded articles having superb mechanical strength.

EP 0 377 998 A2

# INJECTION-MOLDING THERMOSETTING RESIN COMPOSITION

The present invention relates to phenolic resin compositions for injection molding which may have excellent thermal stability in a cylinder and curing properties in a mold and can provide molded articles having superb mechanical strength.

In the injection molding of thermosetting resins, desired resins are those equipped with the mutually contradictory properties in that they are resistant to curing in a cylinder but promptly undergo curing in a mold to provide molded articles having good mechanical strength. Many thermosetting resin molding compositions have heretofore been proposed.

In phenolic resin molding materials, it has been the practice to use an additive such as furfural or styrene in order to improve the thermal stability in a cylinder. However, its effect is not sufficient for the improvement of the thermal stability. For example, when the amount of an additive is increased in order to give sufficient thermal stability, curing does not proceed fully within a mold. This has led to the drawback that curing does not proceed sufficiently in a mold, resulting in the drawback that various physical properties and external appearance of molded articles are impaired. Even when a curing accelerator is used in the above systems, the curing speed in the mold can be increased only a little and the thermal stability in the cylinder is impaired to a considerable extent. It is therefore not preferred to use a curing accelerator.

As another method, it is proposed, for example, in Japanese Patent Laid-Open No. 18861/1979 to use an inorganic salt hydrate and to accelerate curing by using water generated by the decomposition of the inorganic salt hydrate in the mold. In addition, Japanese Patent Laid-Open No. 137294/1978 discloses the addition of at least two ingredients selected from a phenolic resin, a curing agent and a fluidity modifier to a phenolic resin molding material which has been pre-cured by a conventional method. However, any of these methods are not fully effective and have not yet been practiced.

With a view toward solving the above problems, the present inventors have already provided the method which features a use of a fluidity modifier selected from ether compounds having the methylene ether structure, ester compounds containing a methylene group adjacent to a carbonyl ether group and alcohol compounds containing a methylene group adjacent to a hydroxyl group. Other techniques are however still desired in the present field of art.

Preferred embodiments of the invention may attain one or more of the following objects.

An object of the invention is to provide an injection-molding thermosetting resin composition whose curing reaction is suppressed in a cylinder but is not inhibited in a mold.

Another object of the invention is to provide an injection-molding thermosetting resin composition which can provide molded articles free from any appreciable reduction in mechanical strength.

The invention provides an injection-molding thermosetting resin composition (preferably having excellent thermal stability in a cylinder and curing properties in a mold and capable of providing molded articles having superb mechanical strength) comprising a phenolic resin, hexamethylenetetramine, a filler, and a fluidity modifier selected from monomers and dimers of compounds of the following formulae (a) to (c) or a mixture thereof:

(a) melamine compounds represented by the following formula:

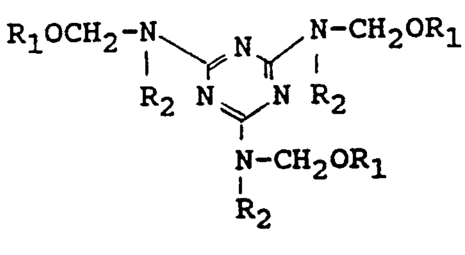

(a)

wherein $R_1$ represents a hydrogen atom or an alkyl group having 1-4 carbon atoms and $R_2$ denotes a hydrogen atom or an alkylated methylene ether group represented by $CH_2OR_1$;

(b) benzoguanamine compounds represented by the following formula:

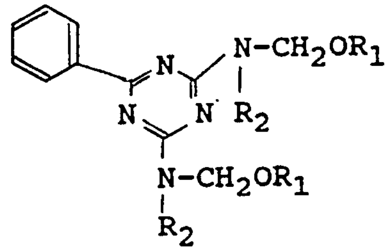

(b)

wherein $R_1$ represents a hydrogen atom or an alkyl group having 1-4 carbon atoms and $R_2$ denotes a hydrogen atom or an alkylated methylene ether group represented by $CH_2OR_1$; and

(c) urea compounds represented by the following formula:

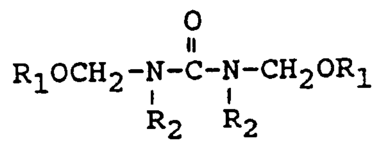

wherein $R_1$ represents a hydrogen atom or an alkyl group having 1-4 carbon atoms and $R_2$ denotes a hydrogen atom or an alkylated methylene ether group represented by $CH_2OR_1$.

## DETAILED DESCRIPTION OF THE INVENTION

The combined use of a fluidity modifier selected from monomers and dimers of the melamine compounds, benzoguanamine compounds and urea compounds or a mixture thereof makes it possible to obtain a phenolic resin molding material which has improved thermal stability in a cylinder, is free from impairment of reactivity in a mold and can provide molded articles without any appreciable reduction in mechanical strength.

The resin composition according to the invention is preferably such that even when the residence time in a cylinder exceeds 4 minutes, it can still be injection-molded at a mold charge time (injection time) of 15 seconds or shorter by using a thermosetting resin injection-molding machine whose front and rear cylinder temperatures and injection pressure are set at 95°C and 410 kg/cm$^2$ respectively and which is equipped with a standard nozzle having a diameter of 4.5 mm.

Of the molding conditions described above, the condition that the front and rear cylinder temperatures are 95°C has never been employed in the evaluation of moldability of compositions of the present sort. This also applies to the injection pressure. Such an injection pressure has not been employed in low-pressure molding phenolic materials proposed to date.

Nevertheless, the curability of the composition in a high temperature range around 170°C is at least comparable with that of conventional materials. The melamine compounds, benzoguanamine compounds and urea compounds, which are useful in the practice of the invention, are each considered to react as a sort of crosslinking agent. It also appears that the crosslinking reaction is suitably suppressed at temperatures around 100°C to be effective for the improvement of fluidity and thermal stability in a cylinder of the composition but proceeds sufficiently around 170°C.

phenolic resins usable in the invention include all the phenolic resins which can be cured with hexamethylenetetramine. Exemplary phenolic resins include phenolic resins obtained by reacting phenols, such as phenol, cresol, xylenol, resorcinol, bisphenol A, p-butylphenol, p-octylphenol and styrenated phenols, with aldehydes such as formaldehyde, p-formaldehyde, trioxane and furfural; phenol-aralkyl resins derived from phenols and p-xylylene dihalides such as $\alpha,\alpha'$-dichloro-p-xylene or p-xylylenedialkyl ethers such as $\alpha,\alpha'$-dimethoxy-p-xylene. These phenolic resins can be used either singly or in combination.

Among the melamine compounds usable as fluidity modifiers in the invention, preferred compounds include methylolmelamine compounds such as dimethylolmelamine, trimethylolmelamine and tetramethylolmelamine and the dimers thereof as well as alkylated methylolmelamine compounds in each of which some or all of the methylol groups have been alkylated. They can each be prepared from melamine, formaldehyde, and if necessary, a suitable alcohol. It is also possible to use a commercial product such as

"Cymel 325" or "Cymel 370" (both trade names; product of Mitsui-Cyanamid, Ltd.) which is a mixture of polycondensation products of melamine, formaldehyde and methanol.

Of the benzoguanamine compounds, preferred compounds include methylolguanamine compounds such as dimethylolbenzoguanamine, trimethylol-benzoguanamine and tetramethylolbenzoguanamine and the dimers thereof as well as alkylated methylolbenzoguanamine compounds in each of which some or all of the methylol groups have been alkylated. It is also possible to use a commercial product such as "Cymel 1123" (trade name; product of Mitsui-Cyanamid, Ltd.) which is a mixture of polycondensation products of benzoguanamine, formaldehyde, methanol and ethanol.

Among the urea compounds, preferred compounds include methylolurea compounds such as dimethylolurea and trimethylolurea and the dimers thereof as well as alkylated methylolurea compounds in each of which some or all of the methylol groups have been alkylated. It is also possible to use a commercial product such as "UFR 65" (trade name; product of Mitsui-Cyanamid, Ltd.) which is a mixture of polycondensation products of urea, formaldehyde and methanol.

In the invention, the fluidity modifier can be used in an amount of 2-20 parts by weight, preferably 3-15 parts by weight per 100 parts by weight of the phenolic resin. Amounts smaller than 2 parts by weight are too little to effectively improve the fluidity and thermal stability in the cylinder. Amounts greater than 20 parts by weight are accompanied by the drawback that the workability will be poor upon pre-curing, thereby resulting in molded articles having impaired quality.

Any of the fillers which are used in conventional phenolic resin molding materials can also be used in the invention, including wood flour, talc, silica, clay, wollastonite, sepiolite, calcium carbonate, magnesium oxide, potassium titanate, glass fibers, vinylon fibers, aramid fibers, carbon fibers, graphite and carbon black. In the invention, the filler can be used generally in an amount of 60-240 parts by weight per 100 parts by weight of the phenolic resin. If the amount of the filler is smaller than 60 parts by weight, problems will arise with respect to moldability, such as the tendency of formation of blisters in molded articles. On the other hand, amounts greater than 240 parts by weight will lead to difficult molding.

Illustrative of additives useful in the practice of the invention include those employed in conventional phenolic resin molding materials, such as pigments, lubricants, electroconductivity imparting agents, anti-oxidants, curing accelerators, synthetic resins such as epoxy resins, silane coupling agents, etc. The amount of the additive usable in the invention generally ranges from 3 parts by weight to 15 parts by weight per 100 parts by weight of the phenolic resin.

In the invention, hexamethylenetetramine can be used in an amount of 8-25 parts by weight, preferably 8-15 parts by weight per 100 parts by weight of the phenolic resin.

The resin composition according to the invention can be formed into a molding material by a conventional method, for example, by kneading the composition with rolls, a kneader or the like and then grinding in a power mill.

To describe effects of the invention, a description will next be made of problems in injection molding, said problems being inherent to the properties of conventional molding materials. Conventional molding materials are accompanied by the drawback that they undergo a crosslinking, i.e., curing reaction at a certain velocity at the plasti cizing temperature in a cylinder of an injection molding machine, namely, at about 100 °C. It is therefore necessary to suppress as much as possible the partial curing reaction which makes a continuous molding operation infeasible. This has resulted in limitations such as the prohibition of use of a screw having a high compression ratio. Additionally, no check valve can be used because it applies a hard shearing action to a material upon passage of the material therethrough. It is also necessary to maintain the plasticizing temperature as low as possible so that a limitation is imposed on the fluidity of a material upon plasticization. Under the current situations, there is, for these reasons, no way other than relying upon the method in which a material in an amount greater than the capacity of a mold is plasticized and is then injected under shear at a high pressure. The principal cause for the formation of burrs, which is considered to be unavoidable in the molding of phenolic materials, can be attributed to such properties of the materials.

Injection-molding materials which can be obtained from the resin compositions of the invention can be molded by a method improved by making use of their excellent thermal stability in a cylinder, for example, by using a molding machine and a molding method which are both used for the injection molding of thermoplastic resins. In other words, so-called "cushioning molding" can be applied and the injection-molding materials can be molded without burrs. Further, the use of a screw having high kneading efficiency can bring about many advantageous effects such that the temperature of each material in the cylinder can be increased to shorten the molding cycle.

The injection-molding materials obtained from the resin compositions of the invention can be applied widely even to the field of large molded articles, in which thermoplastic resin substitutes or conventional

phenolic resins have been considered to be unusable, by burr-free molding or large-volume molding, to say nothing of the application to the fields in which conventional phenolic resins have been used.

Further, the injection-molding materials obtained from the resin compositions of the invention also have many useful industrial advantages upon injection molding in the conventional high injection pressure range, for example, the possibility of precision molding and shortening of the mold charge time owing to the high fluidity, shortening of the molding cycle by using shear heat generated at a gate, and improved workability owing to the high thermal stability such as reduced troubles even when the injection-molding materials remain for a long time in a cylinder.

Examples 1-6:

Using a novolak resin ("Novolak #2000", trade name; product of Mitsui Toatsu Chemicals, Inc.), a phenol-aralkyl resin ("Milex XL-225", trade name; product of Mitsui Toatsu Chemicals, Inc.) and as melamine compounds, i.e., fluidity modifiers, paint resins produced by Mitsui-Cyanamid, Ltd. ("Cymel 325" and "Cymel 370", trade names; mixtures of polycondensation products of melamine, formaldehyde and methanol), resin compositions of the formulations shown in Table 1 were prepared. Those resin compositions were kneaded for about 4 minutes with 14-inch hot rolls in which front and rear rolls were set at 90-100 °C and about 60 °C, respectively. The resulting kneaded sheets were cooled and then crushed in a power mill equipped with a 6 mm screen, thereby obtaining injection-molding thermosetting resin compositions.

With respect to each of those molding materials, the residence time in a cylinder to give a mold charge time of 15 seconds was determined by using an injection molding machine, Model "IR45p", manufactured by Toshiba Machine Co., Ltd. and equipped with a standard nozzle having a diameter of 4.5 mm. Front and rear cylinder temperatures were both set at 95 °C, the injection pressure was controlled at 410 $kg/cm^2$ and the mold temperature was maintained at 170 °C. The mold was a JIS family mold having a cavity capacity of 42 $cm^3$, which was designed for the molding of test pieces suitable for use in the measurement of flexural strength, Charpy impact strength and water absorption.

The results are summarized in Table 1. In addition, the minimum curing time in the mold, which did not give appreciable blisters in any surface of each molded test piece for the measurement of Charpy impact strength was also determined as an index of curing property. Mechanical properties of test pieces obtained under the above injection molding conditions were also measured.

The results of the above tests are also shown in Table 1.

Examples 7-10:

Using the novolak resin ("Novolak #2000", trade name; product of Mitsui Toatsu Chemicals, Inc.), the phenol-aralkyl resin ("Milex XL-225", trade name; product of Mitsui Toatsu Chemicals, Inc.) and as a benzoguanamine compound, i.e., a fluidity modifier, a paint resin produced by Mitsui-Cyanamid, Ltd. ("Cymel 1123", trade name; mixture of polycondensation products of benzoguanamine, formaldehyde, methanol and ethanol), resin compositions of the formulations shown in Table 1 were prepared. Those resin compositions were separately kneaded under heat for about 4 minutes with 14-inch hot rolls in which front and rear rolls were set at 90-100 °C and about 60 °C, respectively. The resulting kneaded sheets were separately cooled and then crushed in a power mill equipped with a 6 mm screen, thereby obtaining injection-molding thermosetting resin compositions.

In a similar manner to Examples 1-6, each of those molding materials was molded and the physical properties of the resulting test pieces were measured. The results are also shown in Table 1.

Examples 11-14:

Using the novolak resin ("Novolak #2000", trade name; product of Mitsui Toatsu Chemicals, Inc.), the phenol-aralkyl resin ("Milex XL-225", trade name; product of Mitsui Toatsu Chemicals, Inc.) and as a urea compound, i.e., a fluidity modifier, a paint resin produced by Mitsui-Cyanamid, Ltd. ("UFR 65", trade name; mixture of polycondensation products of urea, formaldehyde and methanol), resin compositions of the formulations shown in Table 1 were prepared. Those resin compositions were kneaded for about 4 minutes by means of 14-inch hot rolls in which front and rear rolls were set at 90-100 °C and about 60 °C,

respectively. The resulting kneaded sheets were cooled and then crushed in a power mill equipped with a 6 mm screen, thereby obtaining injection-molding thermosetting resin compositions.

In a similar manner to Examples 1-6, each of those molding materials was molded and the physical properties of the resulting test pieces were measured. The results are also shown in Table 1.

Comparative Examples 1-2:

In a similar manner to Examples 1-14 except for the omission of the melamine compounds, benzoguanamine compounds and urea compounds as fluidity modifiers, molding materials were obtained. Similarly, each of the molding materials was molded and the physical properties of the resulting test pieces were measured. The results are also shown in Table 1.

Table 1

| | Example | | | | | | | | | | | | | | Comp. Ex. | |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 1 | 2 |
| Novolak #2000 | 100 | 100 | 100 | 100 | - | - | 100 | 100 | 100 | - | 100 | 100 | 100 | - | 100 | - |
| Milex XL-225 | - | - | - | - | 100 | 100 | - | - | - | 100 | - | - | - | 100 | - | 100 |
| Hexamethylenetetramine | 12 | 12 | 15 | 10 | 9 | 12 | 12 | 12 | 15 | 9 | 12 | 12 | 15 | 9 | 12 | 9 |
| Cymel 325 1) | 3 | 10 | 15 | - | 10 | - | - | - | - | - | - | - | - | - | - | - |
| Cymel 370 1) | - | - | - | 10 | - | 10 | - | - | - | - | - | - | - | - | - | - |
| Cymel 1123 2) | - | - | - | - | - | - | 3 | 10 | 15 | 10 | - | - | - | - | - | - |
| UFR 65 3) | - | - | - | - | - | - | - | - | - | - | 3 | 10 | 15 | 10 | - | - |
| Glass fiber | 140 | 140 | 140 | 140 | 140 | 140 | 140 | 140 | 140 | 140 | 140 | 140 | 140 | 140 | 140 | 140 |
| Other inorganic filler 4) | 100 | 100 | 100 | 100 | 100 | 100 | 100 | 100 | 100 | 100 | 100 | 100 | 100 | 100 | 100 | 100 |
| Wax and other additives 5) | 5 | 5 | 5 | 5 | 5 | 5 | 5 | 5 | 5 | 5 | 5 | 5 | 5 | 5 | 5 | 5 |
| Thermal stability (min) 6 | 3 | 5 | 7 | 4 | 8 | 7 | 3 | 5 | 8 | 10 | 3 | 5 | 7 | 9 | 2 | 2 |
| Minimum curing time (sec) | 35 | 30 | 35 | 30 | 70 | 70 | 40 | 40 | 40 | 70 | 40 | 40 | 40 | 70 | 40 | 70 |
| Flexural strength ($kg/mm^2$) | 19 | 21 | 19 | 20 | 18 | 18 | 19 | 21 | 20 | 19 | 20 | 22 | 21 | 20 | 18 | 18 |
| Tensile strength ($kg/mm^2$) | 6 | 7 | 6 | 7 | 9 | 9 | 6 | 7 | 7 | 9 | 7 | 7 | 6 | 10 | 6 | 9 |
| Charpy impact strength ($kg \cdot cm/cm^2$) | 4 | 5 | 4 | 4 | 5 | 5 | 4 | 4 | 4 | 4 | 4 | 5 | 5 | 5 | 4 | 5 |

1) "Cymel 325" and "Cymel 370": Melamine compounds.
2) "Cymel 1123" : Benzoguanamine compound.
3) "UFR 65" : Urea compound.
4) Other inorganic fillers : 65 parts of Wollastonite and 35 parts of clay.
5) Wax and other additives : 2 parts of wax, 2 parts of carbon black and 1 part of silane coupling agent.
6) Residence time in a cylinder required to give a mold charge time of 15 seconds.

## Claims

1. An injection-molding thermosetting resin composition, comprising a phenolic resin, hexamethylenetetramine, and at least one fluidity modifier selected from monomers and dimers of compounds of the following formulae (a) to (c) and mixtures thereof:

(a) melamine compounds represented by the following formula:

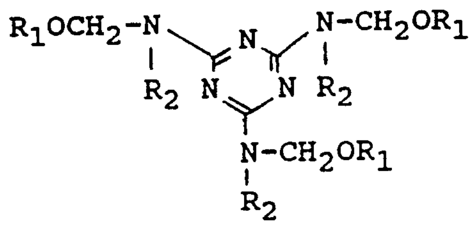

(a)

wherein $R_1$ represents a hydrogen atom or an alkyl group having 1-4 carbon atoms and $R_2$ denotes a hydrogen atom or an alkylated methylene ether group represented by $CH_2OR_1$;

(b) benzoguanamine compounds represented by the following formula:

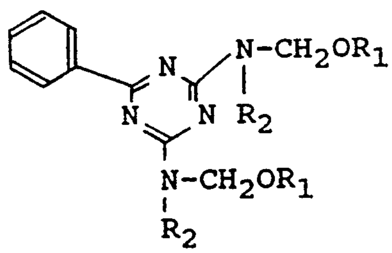

(b)

wherein $R_1$ represents a hydrogen atom or an alkyl group having 1-4 carbon atoms and $R_2$ denotes a hydrogen atom or an alkylated methylene ether group represented by $CH_2OR_1$; and

(c) urea compounds represented by the following formula:

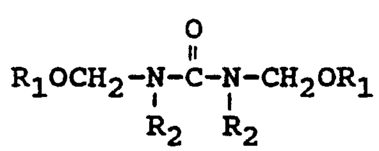

wherein $R_1$ represents a hydrogen atom or an alkyl group having 1-4 carbon atoms and $R_2$ denotes a hydrogen atom or an alkylated methylene ether group represented by $CH_2OR_1$.

2. The resin composition of claim 1, wherein the phenolic resin is a phenolic resin obtained by reacting a phenol with an aldehyde or a phenol-aralkyl resin obtained by reacting a phenol with a p-xylylene dihalide or p-xylylenedialkyl ether.

3. The resin composition of claim 1 or 2 wherein the fluidity modifier is contained in an amount of from 2 to 20 parts by weight per 100 parts by weight of the phenolic resin.

4. The resin composition of claim 1, 2 or 3 wherein the hexamethylenetetramine is contained in an amount of from 8 to 25 parts by weight per 100 parts by weight of the phenolic resin.

5. The resin composition of claim 1, 2, 3 or 4 further comprising a filler and an additive.

6. The resin composition of claim 5, wherein the filler is contained in an amount of from 60 to 240 parts by weight per 100 parts by weight of the phenolic resin.

7. The resin composition of claim 5, wherein the additive is contained in an amount of from 3 to 15 parts by weight per 100 parts by weight of the phenolic resin.

8. A method of injection molding characterised by the use of a resin compsition according to any preceding claim.